# EUROPÄISCHE PATENTSCHRIFT

(11) **EP 4 209 859 B1**
(45) Veröffentlichungstag und Bekanntmachung des Hinweises auf die Patenterteilung: **02.04.2025**
(21) Anmeldenummer: 23150960.5
(22) Anmeldetag: 10.01.2023
(51) Int. Cl.: F16F 9/46, F16F 9/512, F16F 9/34, G05D 16/20

(54) **PILOTSTUFE MIT KUGEL-KEGELSITZ**
PILOT STAGE WITH A SPHERICAL CONE SEAT
ETAGE PILOTE AVEC SIÈGE CONIQUE SPHÉRIQUE

(30) Priorität: 11.01.2022 DE 102022100558
(43) Veröffentlichungstag der Anmeldung: 12.07.2023
(73) Patentinhaber: RAPA Automotive GmbH & Co. KG, 95100 Selb (DE)
(72) Erfinder: Bähr, Sebastian, 95100 Selb (DE)
(74) Vertreter: Klunker IP Patentanwälte PartG mbB

(56) Entgegenhaltungen:
- US-A1- 2019 217 840
- US-B2- 8 662 109
- US-B2- 9 915 276

## Beschreibung

### GEBIET DER ERFINDUNG

Die vorliegende Erfindung betrifft ein vorgesteuertes Druckregelventil sowie einen Stoßdämpfer.

### HINTERGRUND DER ERFINDUNG

Ventile zur Regelung hydraulischer Stoßdämpfer existieren in verschiedenen Bauformen. Neben direktgesteuerten Proportionalventilen, bekannt u.a. aus EP 3 591 273, kommen auch vorgesteuerte Druckregelventile zum Einsatz, wie sie etwa aus WO 2009 157 841 A1 oder WO 2020 182 358 A1 bekannt sind.

In derartigen vorgesteuerten Druckregelventilen wird der zu regelnde Ölstrom durch eine Hauptstufe geführt und dort mehr oder weniger stark drosselt. Die Aktuierung der Hauptstufe erfolgt dabei jedoch nicht direkt durch einen Magnetantrieb, sondern mit Hilfe einer zweiten Ventilstufe, der so genannten Pilotstufe mit einem Pilotstufenventil. Das Pilotstufenventil steuert den Druck auf mindestens einer Seite des Hauptstufenventils und ist damit in der Lage, fluiddynamische Kräfte in der Hauptstufe zu erzeugen, die das Hauptstufenventil betätigen. Das Pilotstufenventil selbst wird mittels eines elektro-magnetischen Aktuators verstellt. Ein Vorteil dieser mehrstufigen Bauform liegt darin, dass mit verhältnismäßig kleinen elektro-magnetischen Aktuatoren hohe Betätigungskräfte in der Hauptstufe erzeugt werden können. Die Ventile sind damit vergleichsmäßig robust gegen hydraulische Störkäfte und bauen sehr kompakt.

Im Bereich der Dämpferregelventile spielt aus technischen Gründen die Variantenbildung eine wichtige Rolle. Die Regelventilfunktion wird im Zusammenspiel mit dem Dämpfer ausgelegt und auf diesen abgestimmt. Für verschiedene Dämpfertypen bzw. Applikationen sind verschiedene Dämpferabstimmungen und damit entsprechende Varianten des Druckregelventils erforderlich.

Eine wichtige Größe bei der Abstimmung des Dämpfers ist beispielsweise der Öffnungsdruck des Regelventils. Er bestimmt die maximale Dämpfkraft und damit die Spreizung des Dämpfers. Der Öffnungsdruck wird durch die Ausgestaltung der Pilotstufe festgelegt. Bei Pilotstufenventilen in Sitz-Bauform, wie in den oben zitierten Schriften der Fall, kann der Öffnungsdruck über das Kräftegleichgewicht aus Magnetkraft und gegebenenfalls einer Federkraft des Aktuators und der Druckkraft des Fluids eingestellt werden. Um verschiedene Öffnungsdrücke zu realisieren, wird üblicherweise der Sitzdurchmesser und damit die Druckkraft variiert.

Die Pilotventile bekannter Druckregelventile werden allgemein durch komplexe Bauteile gebildet, die durch plane Flächen zueinander dichten. Damit werden hohe Anforderungen an Oberflächen und Formabweichungen der Ventilelemente gestellt, was die Herstellung entsprechend aufwändig macht. Darüber hinaus sind die Ventilelemente so in die Gesamtkonstruktion des Regelventils integriert, dass eine Variantenbildung des Öffnungsdrucks mit Hilfe des Sitzdurchmessers nur schwer realisierbar ist.

Derartige vorgesteuerte Druckregelventile sind beispielsweise in den Druckschriften US 9,915,276 B2, US 8,662,109 B2 und US 2019/0217840 A1 beschrieben.

### ZUSAMMENFASSUNG DER ERFINDUNG

Aufgabe der Erfindung ist es, ein kostengünstiges Druckregelventil mit verringertem Herstellungsaufwand anzugeben. Es ist weiterhin Aufgabe der vorliegenden Erfindung einen entsprechenden Stoßdämpfer anzugeben.

Die Aufgabe wird gelöst durch eine Vorrichtung mit den Merkmalen der unabhängigen Ansprüche. Bevorzugte Ausgestaltungen und Weiterbildungen sind in den davon abhängigen Ansprüchen angegeben.

Das erfindungsgemäße Druckregelventil weist ein Pilotstufenventil mit einem Kugelventilkörper und einem Kegelsitz als Ventilsitz für den Kugelventilkörper auf. Im Gegensatz zu etwa Sitzventilen mit planen Dichtflächen stellt eine derartige Kugel-Kegelsitz-Paarung geringere Anforderungen an die Beschaffenheit bzw. die Genauigkeit der den Ventilsitz schaffenden Dicht- bzw. Oberflächen. Dies gestattet es, den Herstellungsaufwand des Pilotstufenventils zu verringern und ein kostengünstiges Pilotstufenventil bereitzustellen und zugleich die Streuung der Parameter des Pilotstufenventils bzw. des Druckregelventils gering zu halten. Der Kugelventilkörper ist ein vollständig sphärischer Köper, vorzugsweise gemäß Güteklasse G5 (nach DIN 5401). Die Maß- und Formtoleranz beträgt entsprechend maximal 0,25 µm. Der Durchmesser des Kugelventilkörpers liegt bevorzugt im Bereich zwischen 1 und 10 mm und beträgt beispielsweise 1, 2, 3, 5, 8 oder 10 mm, wobei jeder der genannten Werte auch eine Ober- oder Untergrenze des genannten Wertebereichs darstellen kann. Der Öffnungsdurchmesser des Kegelsitzes liegt bevorzugt im Bereich zwischen 1,5 mm und 4 mm und beträgt beispielsweise 1,5, 2,0, 2,5, 3,0, 3,5 oder 4,0 mm, wobei jeder der genannten Werte auch eine Ober- oder Untergrenze des genannten Wertebereichs darstellen kann. Der Kegelwinkel (Öffnungswinkel) des Kegelsitzes liegt bevorzugt im Bereich zwischen 100° und 140° und beträgt beispielsweise 100°, 110°, 120°, 130° oder 140°, wobei jeder der genannten Werte auch eine Ober- oder Untergrenze des genannten Wertebereichs darstellen kann.

Erfindungsgemäß weist das Pilotstufenventil weiterhin einen Führungsabschnitt zur Führung des Kugelventilkörpers auf, wenn dieser sich von dem Ventil- bzw. Kegelsitz abhebt bzw. das Pilotstufenventil öffnet. Der Führungsabschnitt befindet sich entsprechend stromabwärts des Kegelsitzes und/oder weist eine zylindrische Innenwandung auf, die koaxial zu einer Ventilachse des Pilotstufenventils bzw. der Zentralachse des Druckregelventils verläuft. Dadurch ist es möglich, dass der Ventilkörper nicht aktiv, beispielsweise durch ein Betätigungselement eines Aktuators, geführt bzw. zwangsgeführt wird und ein entsprechend baugruppen- oder modulübergreifendes Bauteil, bestehend beispielsweise aus dem Betätigungselement und dem Ventilkörper kann vermieden werden. Dies vereinfacht die mechanische Interaktion zwischen Pilotstufe und Aktuator und eröffnet mehr Freiheitsgrade für die (konstruktive) Ausgestaltung des Aktuators. Eine Betätigung des Pilotstufenventils durch den Aktuator geschieht dann bevorzugt nur durch ein Anstoßen bzw. nur durch berührenden Eingriff des Betätigungselements am Kugelventilkörper.

Der Innendurchmesser des Führungsabschnitts ist entsprechend identisch zu dem Durchmesser des Kugelventilkörper zuzüglich einem Spiel (bezogen auf den Durchmesser) bevorzugt im Bereich zwischen 0,01 und 0,1 mm und beträgt beispielsweise 0,01, 0,02, 0,03, 0,05, 0,08 oder 0,1 mm, wobei jeder der genannten Werte auch eine Ober- oder Untergrenze des genannten Wertebereichs darstellen kann. Die Länge des Führungsabschnitts oberhalb des Kegelsitzes liegt bevorzugt im Bereich zwischen 3 und 30 mm und beträgt beispielsweise 3, 5, 8, 10, 15, 20 oder 30 mm, wobei jeder der genannten Werte auch eine Ober- oder Untergrenze des genannten Wertebereichs darstellen kann.

Dabei weist das Pilotstufenventil bevorzugt einen Modulkörper auf, der den Kegelsitz und den Führungsabschnitt bereitstellt bzw. aufweist und der besonders bevorzugt einstückig ausgebildet ist. Entsprechend besteht im einfachsten Fall besteht das Pilotstufenventil aus genau dem Kugelventilkörper und dem Modulkörper, das heißt aus zwei einstückigen Bauteilen . Bevorzugt weist der Führungsabschnitt keine mechanische Sicherung (wie eine Nase oder Einkerbung auf der Innenseite des Führungsabschnitts) gegen ein Entfernen des Kugelventilkörpers aus dem Führungsabschnitt auf. Dies vereinfacht die Montage des Pilotstufenventils. Bevorzugt schafft das Betätigungselement des Aktuators eine Sicherung gegen ein Entfernen des Kugelventilkörpers aus dem Führungsabschnitt, wenn das Druckregelventil montiert ist.

Bevorzugt weist das Pilotstufenventil bzw. dessen Modulkörper stromaufwärts des Kegelsitzes einen Aufnahmeabschnitt zur optionalen bzw. wahlweisen Aufnahme und Befestigung eines Fluid-Bauteils, beispielsweise einer Drossel, im oder am Pilotstufenventil auf. Bevorzugt ist der Aufnahmeabschnitt als Ausnehmung und/oder zylindrische Ausnehmung ausgebildet, die koaxial zu der Ventilachse bzw. Zentralachse verläuft. Die Innenwandung der Ausnehmung weist bevorzugt ein Gewinde bzw. Innengewinde zur Montage des Fluid-Bauteils auf, welches dann aufwandsarm in dem Pilotstufenventil montiert werden kann. Auch können je nach Applikation unterschiedliche Drosseln vorgesehen werden, was die Variantenbildung begünstigt. Alternativ kann die Innenwandung des als Ausnehmung ausgebildeten Aufnahmeabschnitts auch als glatte, zylindrische Fläche ausgebildet werden, so dass ein ausgewähltes Fluid-Bauteil beispielsweise in die Ausnehmung eingepresst oder auch eingesetzt und anschließend im Pilotstufenventil bzw. dessen Modulkörper befestigt werden kann, beispielsweise durch Verschweißen oder Verlöten. Eine derartige Drossel begrenzt den Durchfluss durch die Pilotstufe wenn das Pilotstufenventil (vollständig) geöffnet ist. Ist das Fluid-Bauteil als Drossel ausgebildet, so liegt der Drosselquerschnitt bevorzugt im Bereich zwischen 0,01 und 1 mm² und beträgt beispielsweise 0,01, 0,02, 0,05, 0,1, 0,2, 0,5 oder 1 mm², wobei jeder der genannten Werte auch eine Ober- oder Untergrenze des genannten Wertebereichs darstellen kann.

Bevorzugt weist das Pilotstufenventil eine Failsafe-Funktion auf. Dazu umfasst das Pilotstufenventil einen Failsafe-Ventilsitz am dem Kegelsitz gegenüberliegenden Ende des Führungsabschnitts, sowie bevorzugt ein Federelement, das den Kugelventilkörper in den Failsafe-Ventilsitz drängt. Somit sitzt der Kugelventilkörper wenn der Aktuator unbestromt ist, das heißt ohne Aktuatorkräfte, beispielsweise bei Stromausfall, sicher im Failsafe-Ventilsitz. Der Failsafe-Ventilsitz bildet somit einen zweiten, zusätzlichen Ventilsitz, der bevorzugt ebenfalls als Kegelsitz ausgebildet ist. Dabei stützt sich das Federelement innerhalb des Kegelsitzes ab. Der Führungsabschnitt ist in diesem Fall nicht vollständig zur vom Kegelsitz gegenüberliegenden Seite offen, sondern weist lediglich eine axiale Öffnung in der Stirnseite des Pilotstufenmoduls bzw. auf der Ventilachse für eine Betätigung durch den Aktuator auf. Somit ist das Pilotstufenventil stromlos sicher geöffnet bzw. teilgeöffnet mit einem definierten Öffnungsquerschnitt, der kleiner als der maximale Öffnungsquerschnitt des Pilotstufenventils ist. Bevorzugt weist das Pilotstufenmodul Bypassöffnungen auf und/oder der Kugelventilkörper dichtet den Failsafe-Ventilsitz nicht vollständig ab. Dabei weist der Failsafe-Ventilsitz bevorzugt ein Vieleck als axiale Durchgangs- bzw. Ventilöffnung auf, insbesondere ein regelmäßiges Vieleck, beispielsweise ein (gleichseitiges) Dreieck, Rechteck, Quadrat, Sechseck, Hexagon oder Achteck.

Dabei weist das Pilotstufenmodul bevorzugt ein Failsafe-Bauelement auf, das den Failsafe-Ventilsitz aufweist und bevorzugt als Kappe bzw. Hülse für den Modulkörper ausgebildet ist. Weiterhin sind in diesem Fall keine radialen Ausströmöffnungen in dem Pilotstufenventil bzw. dessen Modulkörper vorgesehen und/oder diese werden durch das Failsafe-Bauelement geschlossen.

In einer bevorzugten Ausgestaltung weist das Druckregelventil eine Vielzahl von Funktionsmodulen auf nämlich zumindest ein Pilotstufenmodul und ein Aktuatormodul, das heißt wenigstens zwei Funktionsmodule.

Dabei ist ein Funktionsmodul allgemein eine Baugruppe, genauer eine modulare Baugruppe des Druckregelventils, die eine bestimmte bzw. die für diese Baugruppe bzw. das Funktionsmodul jeweils vorgesehene Funktionalität (vollständig) bereitstellt und die die bzw. alle oder zumindest alle wesentlichen konstruktiven Bauelemente für diese Funktionalität umfasst. Funktionsmodule sind somit strukturell und funktionell verschiedene bzw. voneinander abgegrenzte Baugruppen des Druckregelventils, die im montierten Druckregelventil bevorzugt keine baugruppen- oder modul übergreifenden Bauteile aufweisen. Somit wird im einfachsten Fall eine gegebene Funktionalität in dem Druckregelventil ausschließlich von dem jeweiligen bzw. genau einem Funktionsmodul bereitgestellt.

Das Pilotstufenmodul des Druckregelventils realisiert entsprechend (genau oder wenigstens) die Funktionalität der Pilotstufe in dem Druckregelventil, die zum fluid-dynamischen, in der Regel hydraulischen Vorsteuern des Druckregelventils bzw. dessen Hauptstufe dient, und/oder enthält die bzw. alle dazu notwendigen Bauteile, wie ein Pilotstufenventil. Entsprechend wird in dem Druckregelventil im einfachsten Fall die Funktionalität der Pilotstufe ausschließlich durch das Pilotstufenmodul bereitgestellt. Dabei besteht das Pilotstufenmodul im einfachsten Fall genau aus dem Pilotstufenventil.

Das Aktuatormodul des Druckregelventils realisiert (genau oder wenigstens) die Funktionalität des Aktuators in dem Druckregelventil, der zum Betätigen der Pilotstufe bzw. des Pilotstufenmoduls bzw. des Pilotstufenventils des Pilotstufenmoduls, insbesondere eines Ventilkörpers des Pilotstufenventils dient, und/oder enthält die dazu notwendigen Bauteile, wie beispielsweise eine Spule und einen Magnetanker und gegebenenfalls ein Federelement. Entsprechend wird in dem Druckregelventil im einfachsten Fall die Funktionalität des Aktuators ausschließlich durch das Aktuatormodul bereitgestellt.

Mit Vorteil sind das Pilotstufenmodul und das Aktuatormodul, bevorzugt alle Funktionsmodule des Druckregelventils, jeweils als vormontierte bzw. vorgefertigte Module bzw. Baugruppen ausgebildet. Mit anderen Worten sind bevorzugt sämtliche Bauteile eines Funktionsmoduls in bzw. zu einer (vormontierten) Baugruppe integriert. Ebenso sind mit Vorteil in dem Druckregelventil miteinander unmittelbar fest verbundene Funktionsmodule über nur genau eine mechanische Schnittstelle und/oder mit genau einer Fügeart (z.B. durch ein Verpressen, Verschweißen, Verlöten, etc.) miteinander fest verbunden. Dies vereinfacht die Montage bzw. Endmontage des Druckregelventils.

Bevorzugt sind das Pilotstufenmodul und das Aktuatormodul über eine Pressverbindung, bevorzugt genau und/oder ausschließlich über eine Pressverbindung, miteinander fest verbunden und dabei unmittelbar aneinanderliegend angeordnet. Eine derartige Pressverbindung gestattet, neben einer einfachen und ausreichend festen Befestigung des Pilotstufenmoduls im oder am Aktuatormodul, eine Justage bzw. Feineinstellung der Position von Pilotstufenmodul und Aktuatormodul relativ zueinander, beispielsweise während der Montage und/oder auch im Anschluss an die Montage. Dabei schafft eine Pressverbindung einen Kraft- bzw. Reibschluss entlang jeweils korrespondierender Pressflächen.

Bevorzugt weist das Aktuatormodul einen Aktuator mit einer Aktuatorachse auf, das heißt die Aktuierung (des Pilotstufenventils) geschieht (durch eine reziproke Bewegung) entlang einer geraden Strecke. Der Aktuator ist entsprechend bevorzugt ein Linearaktuator.

Weiterhin weist das Aktuatormodul zur Bereitstellung der bzw. der genau einen Pressverbindung mit dem Pilotstufenmodul eine bzw. genau eine bevorzugt zylindrische und/oder zu der Aktuatorachse gerichtete, radiale, koaxiale, kolineare bzw. konzentrische Pressfläche auf, wobei die Pressfläche bevorzugt vollständig durchgängig ist, gegebenenfalls aber auch in mehrere Teilflächen unterteilt sein oder Unterbrechungen aufweisen kann. Diese Pressfläche schafft bevorzugt genau eine Pressverbindung. Bevorzugt bildet diese Pressfläche die (innere bzw. nach innen weisende) Ober- bzw. Mantelfläche einer Ausnehmung in dem Aktuatormodul, wobei die Ausnehmung die Aktuatorachse umfasst und bevorzugt zylindrisch oder im wesentlichen zylindrisch und/oder koaxial, kolinear bzw. konzentrisch zu der Aktuatorachse ausgebildet ist. Dabei ist die Aktuatorachse bevorzugt zugleich eine Symmetrie- und/oder Zentralachse des (gesamten) Aktuatormoduls bzw. des Aktuators.

Das Pilotstufenmodul weist bevorzugt ein Pilotstufenventil auf, das entlang einer bzw. der Ventilachse betätigbar ist und welches bevorzugt ein Sitzventil ist. Im einfachsten Fall weist das Pilotstufenventil einen Ventilkörper auf, der entlang der Ventilachse verschiebbar ist und das Pilotstufenventil öffnet und schließt, wenn der Ventilkörper beispielsweise von einem korrespondierenden Ventilsitz abgehoben wird bzw. in den Ventilsitz einfährt. Mit anderen Worten verursacht und/oder gestattet das Aktuatormoduls bei Betätigung der Pilotstufe eine in der Regel reziproke und/oder geradlinige Bewegung des Ventilkörpers entlang der Ventilachse.

Weiterhin weist das Pilotstufenmodul zur Schaffung der bzw. genau einer Pressverbindung mit dem Aktuatormodul eine mit der Pressfläche des Aktuatormoduls korrespondierende bevorzugt zylindrische und/oder von der Ventilachse weg gerichtete, radiale, koaxiale, kolineare bzw. konzentrische Pressfläche auf, wobei die Pressfläche bevorzugt vollständig durchgängig ist, gegebenenfalls aber auch in mehrere Teilflächen unterteilt sein oder Unterbrechungen aufweisen kann, die dann bevorzugt mit entsprechenden Teilflächen bzw. Unterbrechungen der Pressfläche des Aktuatormoduls korrespondiert. Diese Pressfläche schafft bevorzugt genau eine Pressverbindung. Bevorzugt bildet diese Pressfläche die (äußere bzw. nach außen weisende) Ober- bzw. Mantelfläche des Pilotstufenmoduls, wobei bevorzugt das gesamte Pilotstufenmodul zylindrisch oder im Wesentlichen zylindrisch und/oder rotationssymmetrisch (gegebenenfalls abgesehen von radialen Fluidöffnungen) ausgebildet ist. Die Ventilachse bildet bevorzugt eine Symmetrie- und/oder Zentralachse des (gesamten) Pilotstufenmoduls. Das Pilotstufenmodul bildet somit eine Patrone, die mit der oben beschriebenen Ausnehmung in dem Aktuatormodul korrespondiert und darin teilweise oder vollständig aufgenommen wird, so dass die korrespondierenden Pressflächen eine Pressverbindung zwischen Aktuatormodul und Pilotstufenmodul schaffen.

Entsprechend fallen in dem montierten Druckregelventil dann bevorzugt Aktuatorachse des Aktuatormoduls und Ventilachse des Pilotstufenmoduls zu einer bzw. der gemeinsamen Zentralachse des Druckregelventils zusammen, so dass das Aktuatormodul bzw. der Aktuator des Aktuatormoduls das Pilotstufenventil des Pilotstufenmoduls entlang dieser Zentralachse betätigen kann. Wegen der erfindungsgemäßen Pressverbindung kann dann die oben beschriebene Justage bzw. Feineinstellung entlang dieser Zentralachse vorgenommen und somit die axiale Position von Aktuatormodul und Pilotstufenmodul relativ zueinander entlang der Zentralachse justiert bzw. feineingestellt werden. Dies gestattet es eine Streuung (beispielsweise hinsichtlich einer Feder- und/oder Magnet- bzw. Aktuatorkraft und/oder eines Öffnungsdrucks) in einer Charge von mehreren Druckregelventilen bzw. bei Serienfertigung zu reduzieren, beispielsweise bezüglich eines Luftspalts und/oder eines Remanenzabstands eines Magnetankers in dem Aktuator, insbesondere wenn dieser das Pilotstufenventil schließt bzw. wenn sich in dem Pilotstufenventil der Ventilkörper im Ventilsitz anschlägt. Bevorzugt liegen die Schwankungen des Öffnungsdrucks in einer Charge unter 10%, besonders bevorzugt unter 5%.

Dabei weist das Aktuatormodul allgemein ein Betätigungselement auf, mit welchem das Aktuatormodul das Pilotstufenventil des Pilotstufenmoduls betätigt. Das Betätigungselement ist im einfachsten Fall der Magnetanker selbst, der in der Regel vollständig aus magnetischem Material besteht, oder ein bevorzugt nicht-magnetischer Stößel, der dann beispielsweise mit dem Magnetanker fest verbunden ist bzw. mit dem Magnetanker ein einteiliges Bauelement bildet, das beispielsweise dazu eingerichtet ist, entlang der Aktuatorachse bzw. der gemeinsamen Zentralachse reziproke und/oder geradlinige Bewegungen auszuführen. Dabei stößt bzw. schlägt das Betätigungselement bei bzw. zur Betätigung des Pilotstufenventils mit Vorteil (lediglich) an dem Ventilkörper des Pilotstufenventils des Pilotstufenmoduls an. Mit anderen Worten steht mit Vorteil das Betätigungselement (lediglich bzw. genau) in berührendem Eingriff mit dem Ventilkörper des Pilotstufenventils des Pilotstufenmoduls, insbesondere dann, wenn der Ventilkörper das Pilotstufenventil schließt bzw. wenn der Ventilkörper an dem Ventilsitz anschlägt. Es besteht somit keine feste mechanische Verbindung zwischen dem Betätigungselement und dem Ventilkörper, das heißt es findet keine Zwangsführung des Ventilkörpers durch das Betätigungselement des Aktuatormoduls statt. Ein modulübergreifendes Bauteil (zwischen Aktuatormodul und Pilotstufenmodul) wird entsprechend vermieden bzw. entsteht nicht. Dabei ist der Ventilkörper des Pilotstufenventils mit Vorteil nicht-magnetisch bzw. magnetisch nicht-leitend.

Bevorzugt sind Pilotstufenmodul und Aktuatormodul ausschließlich über die erfindungsgemäße Pressverbindung miteinander fest verbunden. Dies vereinfacht die Montage des Druckregelventils und gestattet zugleich eine Justage bzw. Nachjustage während oder zeitlich getrennt von der Montage des Druckregelventils.

Durch den erfindungsgemäß modularen Aufbau von Pilotstufe und Aktuator des Druckregelventils, in Form von Pilotstufenmodul und Aktuatormodul, werden nicht nur baugruppen- oder modulübergreifende Bauteile vermieden, sondern auch die (bevorzugt einzige) mechanische Schnittstelle (hier Pressverbindung mit korrespondierenden Pressflächen auf Pilotstufenmodul und Aktuatormodul) zur Schaffung der festen mechanischen Verbindung zwischen Pilotstufenmodul und Aktuatormodul vereinfacht. Daher kann beispielsweise ein Funktionsmodul leicht gegen eine Variante davon ausgetauscht werden. Mit anderen Worten begünstigt das erfindungsgemäße Druckregelventil eine Variantenbildung bzw. Ausbildung von verschiedenen Druckregelventilen mit unterschiedlichen Parametern, da hierzu oftmals eine Anpassung an nur einer Funktionalität notwendig ist und dann nur das entsprechende, das heißt ein einziges Funktionsmodul durch eine Variante davon ausgetauscht werden muss, während die übrigen Bauteile und/oder Funktionsmodule des Druckregelventils unverändert bleiben und somit Gleichteile sind. Entsprechend bleibt bevorzugt auch die Schnittstelle zur Befestigung des Funktionsmoduls bei Varianten eines Funktionsmoduls unverändert. Beispielsweise kann ein Pilotstufenmodul mit einem anderen Öffnungsquerschnitt bzw. Ventilsitzdurchmesser verwendet werden, um einen Öffnungsdruck und/oder einen Druckanstieg- und/oder -abfall des Druckregelventils zu verändern. Ebenso kann ein Aktuatormodul mit einem anderen Arbeitsprinzip (beispielsweise NC (normally closed; stromlos geschlossen) oder NO (normally open; stromlos offen)) oder anderen Magnet- und/oder Feder-Kräften und/oder -Kraftverläufen gewählt werden. Ebenso kann das Druckregelventil (für unterschiedliche Applikationen) an unterschiedliche externe mechanische, hydraulische und/oder elektrische Schnittstellen- oder auch Bauraumerfordernisse angepasst werden.

In einer bevorzugten Ausgestaltung umfasst das erfindungsgemäße Druckregelventil als weiteres Funktionsmodul ein Hauptstufenmodul, das (genau oder wenigstens) die Funktionalität der Hauptstufe des Druckregelventils realisiert und hierzu zumindest ein Hauptstufenventil enthält. Auch die Hauptstufe des Druckregelventils ist entsprechend als Funktionsmodul realisiert. Das Hauptstufenmodul ist dabei mit dem Aktuatormodul (oder gegebenenfalls auch dem Pilotstufenmodul) fest verbunden. Bevorzugt geschieht auch dies wiederum über eine Pressverbindung und/oder genau eine mechanische Schnittstelle bzw. genau eine Fügeart. Im einfachsten Fall ist das Hauptstufenmodul ausschließlich über eine Pressverbindung mit dem Aktuatormodul oder Pilotstufenmodul fest verbunden. Hierzu weisen Hauptstufenmodul und Aktuatormodul bzw. Pilotstufenmodul jeweils korrespondierende, bevorzugt zylindrische Pressflächen auf, die radial, koaxial, kolinear bzw. konzentrisch zu der gemeinsamen Ventilachse des Druckregelventils angeordnet sind. Weiterhin weist bevorzugt das Hauptstufenmodul bzw. dessen Hauptstufenventil eine Zentral- bzw. Symmetrieachse auf, die besonders bevorzugt im montierten Druckregelventil mit der Zentralachse des Druckregelventils zusammenfällt. Das Hauptstufenmodul bzw. dessen Hauptstufenventil ist entsprechend koaxial zu Pilotstufenmodul und/oder Aktuatormodul angeordnet. Mit Vorteil ist auch das Hauptstufenmodul bzw. zumindest dessen Hauptstufenventil zylindrisch oder im Wesentlichen zylindrisch und/oder rotationssymmetrisch (gegebenenfalls abgesehen von radialen Fluidöffnungen) ausgebildet. Im Übrigen gilt das oben in Bezug auf das Pilotstufenmodul Gesagte sinngemäß auch für das Hauptstufenmodul. Dabei umfasst das Hauptstufenmodul mit Vorteil ein Hauptstufenventil, das als passives Sitzventil oder Kolbenschieberventil ausgebildet ist, und ein Hauptstufengehäuse oder besteht daraus. Dabei ergeben sich Vorteile im dynamischen Betrieb, wenn das Hauptstufenventil als Sitzventil ausgebildet ist, da ein Sitzventils ein schnelleres Ansprechverhalten aufweist. Das Sitzventil reagiert im Vergleich zu einem Kolbenschieberventil auf plötzliche Volumenstromänderungen schneller, da es im Gegensatz zum Kolbenschieberventil keine positive Überdeckung benötigt, um geringe Leckagen zu realisieren. Dadurch können im Hauptstufenventil beispielsweise Überschwinger im Druck bei plötzlicher Volumenstromänderung reduziert bzw. vermieden werden.

Mit diesem Vorsehen eines Hauptstufenmoduls als zusätzlichem Funktionsmodul umfasst das Druckregelventil entsprechend wenigstens drei Funktionsmodule. Bevorzugt umfasst das Druckregelventil jedoch (lediglich) genau diese drei Funktionsmodule (Aktuatormodul, Pilotstufenmodul und Hauptstufenmodul) und wird aus diesen drei Funktionsmodulen aufgebaut. Im einfachsten Fall besteht das Druckregelventil genau aus Aktuatormodul, Pilotstufenmodul und Hauptstufenmodul. Das Druckregelventil ist im letzteren Fall vollst. modular und kann beispielsweise durch das Vorsehen von (nur) genau festen mechanischen Verbindungen vorzugsweise zwei Pressverbindungen montiert werden. Mit Vorteil sind sämtliche Funktionsmodule des Druckregelventils (ausschließlich) über Pressverbindungen miteinander fest verbunden.

Darüber hinaus können noch weitere mechanische, hydraulische und/oder auch magnetische Wechselwirkungen zwischen den Funktionsmodulen vorgesehen sein. Beispielsweise kann sich ein Federelement der Hauptstufe unmittelbar auf dem Aktuatormodul oder dem Pilotstufenmodul abstützen. Ebenso findet die oben beschriebene Betätigung des Pilotstufenventils im Pilotstufenmodul durch das Aktuatormodul bzw. dessen Betätigungselement statt. Desweiteren bildet beispielsweise das Hauptstufenmodul zusammen mit dem Pilotstufenmodul und gegebenenfalls auch dem Aktuatormodul den Pilotraum.

In einer bevorzugten Ausgestaltung ist das Aktuatormodul selbst ebenfalls modular aufgebaut bzw. in Untermodule unterteilt und umfasst dazu ein Spulenmodul, ein Magnetantriebsmodul und ein Spulendeckelmodul oder besteht (ausschließlich) aus diesen drei Modulen. Dabei wird zur Bildung des Aktuatormoduls bevorzugt das Magnetantriebsmodul mit dem Spulendeckelmodul fest verbunden und anschließend das Spulenmodul mit dem Spulendeckelmodul fest verbunden und dadurch besonders bevorzugt der Magnetkreis geschlossen, wobei besonders bevorzugt das Magnetantriebsmodul vollständig in einem durch Spulenmodul und Spulendeckelmodul geschaffenen Innenraum angeordnet ist. Bevorzugt schaffen Spulenmodul und Spulendeckelmodul zusammen ein Gehäuse des Aktuatormoduls, das besonders bevorzugt (lediglich) auf der Aktuatorachse eine Durchgangsöffnung für das Betätigungselement aufweist und/oder im Übrigen vollständig geschlossen ist und hierzu bevorzugt eine vollständig geschlossene Außenhaut aufweist. Das Spulenmodul umfasst zumindest eine Magnetspule und elektrische Anschlüsse zur Bestromung der Magnetspule, sowie bevorzugt magnetisch leitendes Material zur (teilweisen) Ausbildung des Magnetkreises an einer (dem Pilotstufenmodul bzw. Hauptstufenmodul abgewandten bzw. rückseitigen) Stirnseite und besonders bevorzugt auch an der radialen Außenseite des Spulenmoduls bzw. der Spule. Das Magnetantriebsmodul umfasst ein (entlang der Aktuatorachse des Aktuatormoduls bzw. der Zentralachse des Druckregelventils) linear beweglich gelagertes Betätigungselement (bestehend im einfachsten Fall lediglich aus einem Magnetanker oder umfassend gegebenenfalls weiterhin einen damit fest verbundenen, nicht-magnetischen Stößel), sowie ein oder mehrere im Aktuatormodul bzw. Spulenmodul (bei bestimmungsgemäßer Anordnung) feststehende, magnetisch leitende Bauelemente, zumindest einen feststehenden Polkern, der bei Bestromung der Spule den Magnetanker magnetisch anzieht bzw. auf den sich der Magnetanker bei ausreichender Bestromung zubewegt. Der Polkern ist dabei üblicherweise auf der Aktuatorachse angeordnet und dient je nach Ausgestaltung des Magnetantriebsmoduls gegebenenfalls als Anschlag für den Magnetanker. Bevorzugt weist das Magnetantriebsmodul weiterhin ein Polrohr, ein Federelement und/oder weitere feststehende magnetisch leitende Bauteile zur Ausbildung des Magnetkreises des Aktuatormoduls auf. Je nach Ausgestaltung des Magnetantriebsmodul verfährt der Magnetanker bzw. das Betätigungselement bei Bestromung der Spule dann zu der rückseitigen oder der gegenüberliegenden vorderseitigen Stirnseite des Spulenmoduls bzw. der Magnetspule. Mit anderen Worten fährt das Betätigu ngselement im ersten Fall bei Bestromung in das Aktuatormodul ein, so dass sich eine NC-Funktionalität für die Pilotstufe ergibt; im letzeren Fall fährt das Betätigungselement bei Bestromung aus dem Aktuatormodul aus, so dass sich eine NO-Funktionalität für die Pilotstufe ergibt. Das Spulendeckelmodul enthält ebenfalls magnetisch leitendes Material zumindest an der vorderseitigen Stirnseite (gegebenenfalls auch an der radialen Außenseite) des Spulenmoduls bzw. der Spule und schließt somit den Magnetkreis um die Magnetspule. Das Spulendeckelmodul kann auch als Gehäuseplatte bezeichnet werden. Das Spulendeckelmodul weist bevorzugt weiterhin ein Durchgangsloch für ein Betätigungselement auf (beispielsweise den Magnetanker oder einen damit (fest) verbundenen Stößel). Weiterhin weist das Durchgangsloch bevorzugt die Pressfläche des Aktuatormoduls bzw. des Spulendeckelmoduls zur Ausbildung der Pressverbindung mit dem Pilotstufenmodul auf.

Diese drei Module des Aktuatormoduls sind bevorzugt vormontierte Baugruppen, wobei das Spulendeckelmodul besonders bevorzugt einstückig ausgebildet ist und dann entsprechend vollständig aus magnetisch leitendem Material besteht. Weiterhin sind bevorzugt das Spulenmodul und das Magnetantriebsmodul über jeweils (genau) eine Pressverbindung fest mit dem Spulendeckelmodul verbunden. Diese Pressverbindungen werden bevorzugt durch korrespondierende zylindrische Pressflächen geschaffen, die besonders bevorzugt koaxial zu der Zentralachse angeordnet sind. Dies gestattet nicht nur eine einfache Montage des Aktuatormoduls. Die oben dargelegte vorteilhafte Unterteilung der Bauelemente eines Aktuatormoduls in diese drei Module bzw. Untermodule vermeidet zudem modulübergreifende Bauteile, so dass zur Variantenbildung des Aktuatormoduls eines seiner Module durch eine Variante davon ausgetauscht werden kann, ohne Veränderungen an den übrigen Modulen notwendig zu machen. Insbesondere die oben beschriebene Bauteilauswahl für das Magnetantriebsmodul gestattet es, Magnetantriebsmodule mit entgegengesetzten bzw. unterschiedlichen Funktionalitäten (NO- bzw. NC-Funktionalität) bereitzustellen und dabei sämtliche Schnittstellen (geometrisch, magnetisch, etc.) zu den übrigen Modulen des Aktuatormoduls unverändert zu lassen. Die Verbindung zwischen Magnetantriebsmodul und Spulendeckelmodul ist bevorzugt zusätzlich verschweißt, um die Festigkeit und Dichtheit nach außen unter Druck zu gewährleisten.

In einer bevorzugten Ausgestaltung des Druckregelventils ist das Spulendeckelmodul in dem Druckregelventil zentral angeordnet und/oder bildet bevorzugt einen bzw. den einzigen zentralen Baustein des Druckregelventils, mit welchem besonders bevorzugt alle übrigen Funktionsmodule und Module bzw. Untermodule fest verbunden sind. Entsprechend ist bevorzugt das Spulendeckelmodul mit dem Pilotstufenmodul, dem Hauptstufenmodul, dem Spulenmodul und dem Magnetantriebsmodul über jeweils eine bzw. genau eine Pressverbindung fest verbunden. Besonders bevorzugt bildet die Pressverbindung zwischen Spulendeckelmodul und Pilotstufenmodul die einzige feste Verbindung zwischen Spulendeckelmodul und Pilotstufenmodul. Besonders bevorzugt bildet die Pressverbindung zwischen Spulendeckelmodul und Hauptstufenmodul die einzige feste Verbindung zwischen Spulendeckelmodul und Hauptstufenmodul. Besonders bevorzugt bildet die Pressverbindung zwischen Spulendeckelmodul und Spulenmodul die einzige feste Verbindung zwischen Spulendeckelmodul und Spulenmodul. Besonders bevorzugt ist neben der Pressverbindung zwischen Spulendeckelmodul und Magnetantriebsmodul zusätzlich eine Verschweißung, insbesondere eine Laserverschweißung zwischen Spulendeckelmodul und Magnetantriebsmodul vorgesehen. Entsprechend weist das Spulendeckelmodul zur Schaffung der (genau) vier Pressverbindungen zu Pilotstufenmodul, Hauptstufenmodul, Spulenmodul bzw. Magnetantriebsmodul bevorzugt (genau) vier Pressflächen auf, die besonders bevorzugt jeweils zylindrisch ausgebildet und/oder koaxial zu der Zentralachse angeordnet sind. Desweiteren weisen bevorzugt das Pilotstufenmodul, das Hauptstufenmodul, das Spulenmodul und das Magnetantriebsmodul jeweils keine feste Verbindung, insbesondere keine Pressverbindung, Verschraubung und/oder Verschweißung, untereinander auf. Dies begünstigt die Modularität des Druckregelventils und begrenzt Änderungen in dem Druckregelventil in Folge von Änderungen an einem der Funktionsmodule oder Module bzw. Untermodule, die die jeweilige Befestigung am Spulendeckelmodul betreffen, im einfachsten Fall auf eine korrespondierende Anpassung des Spulendeckelmoduls.

Die vorliegende Erfindung umfasst weiterhin einen Stoßdämpfer mit einem, zwei oder mehreren der oben beschriebenen Druckregelventilen. Der Stoßdämpfer umfasst im einfachsten Fall einen Druckzylinder, in dem ein axial verfahrbarer Kolben das Volumen des Druckzylinders in zwei Druckkammern teilt. In einer vorteilhaften Ausgestaltung umfasst der Stoßdämpfer dann zwei der oben beschriebenen Druckregelventile, wobei für jede der zwei möglichen Strömungsrichtungen zwischen den Druckkammern jeweils ein Druckregelventil und gegebenenfalls ein Rückschlagventil vorgesehen ist. In einer alternativen Ausgestaltung umfasst der Stoßdämpfer genau ein Druckregelventil, das mit einer Fluid-Gleichrichtung kombiniert ist.

### KURZE BESCHREIBUNG DER ZEICHNUNGEN

Die Erfindung wird im Folgenden mit Bezug auf die beiliegenden Zeichnungen beschrieben. Die Zeichnungen sind lediglich schematische Darstellungen und die Erfindung ist nicht auf die speziellen, dargestellten Ausführungsbeispiele beschränkt.
- Figuren 1A, B, C: zeigen verschiedene perspektivische Schnittansichten eines Druckregelventils mit NO-Magnetantriebsmodul,
- Figur 2: zeigt eine perspektivische Schnittansicht eines Druckregelventils mit einem NC-Magnetantriebsmodul,
- Figuren 3A, B, C: zeigen Schnittansichten durch ein Pilotstufenmodul,
- Figuren 4A, B: zeigen verschiedene p-Q-Kennlinien,
- Figur 5A: zeigt eine Schnittansicht durch ein zweites Ausführungsbeispiel eines Pilotstufenmoduls,
- Figur 5B: zeigt eine perspektivische Ansicht eines Failsafe-Bauelements,
- Figur 6: zeigt eine p-Q-Kennlinien einer Pilotstufe gemäß dem zweiten Ausführungsbeispiel, und
- Figur 7: zeigt eine schematische Darstellung eines Stoßdämpfers mit zwei Druckregelventilen.

### DETAILLIERTE BESCHREIBUNG

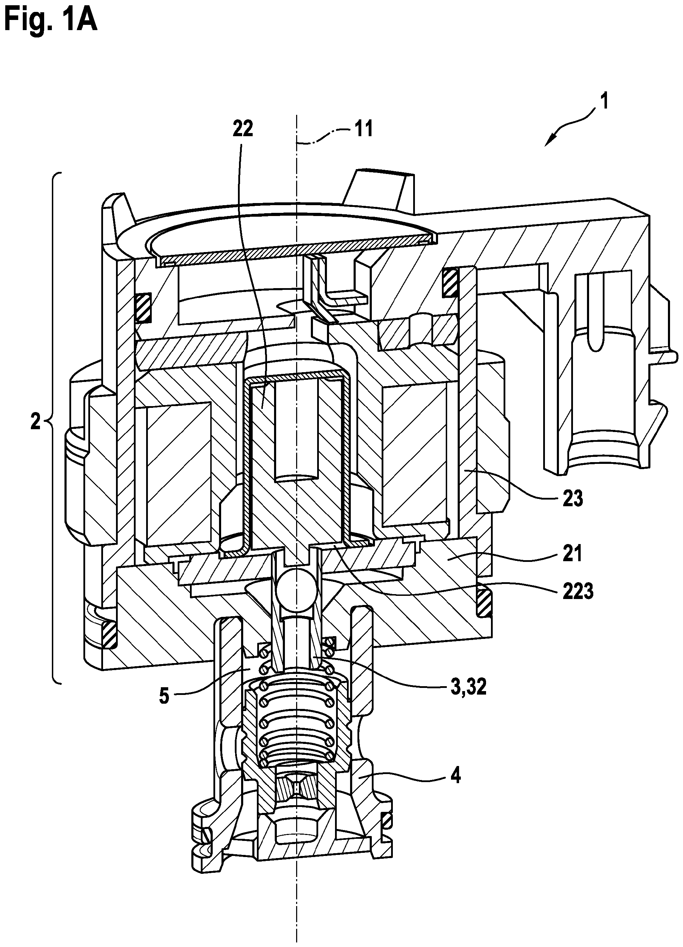

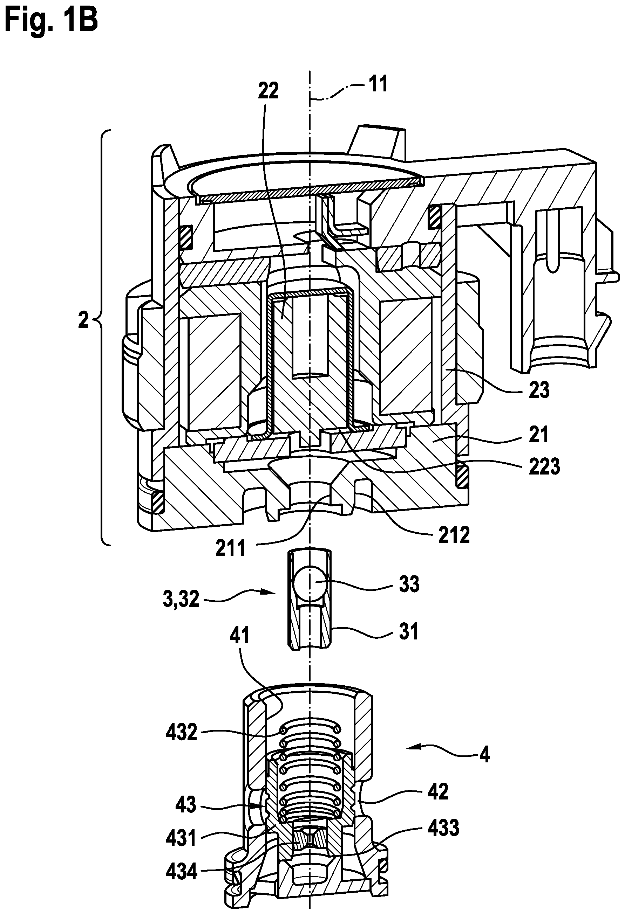

In Figur 1A ist ein Druckregelventil 1 in einer perspektivischen Schnittansicht dargestellt. Das Druckregelventil besteht aus genau drei Funktionsmodulen: einem Aktuatormodul 2, einem Pilotstufenmodul 3 und einem Hauptstufenmodul 4. In Figur 1B ist eine perspektivische Explosionszeichnung bezüglich dieser drei Funktionsmodule 2, 3, 4 dargestellt. Dabei weist das Pilotstufenmodul 3 eine radial außenliegende, zylindrische Pressfläche 31 auf, die mit einer korrespondierenden Pressfläche 211 in dem Aktuatormodul 2 bzw. dessen Spulendeckelmodul 21 eine Pressverbindung zwischen dem Aktuatormodul 2 und dem Pilotstufenmodul 3 schafft. Ebenso weist auch das Hauptstufenmodul 4 eine in dem dargestellten Ausführungsbeispiel radial innenliegende, zylindrische Pressfläche 41 auf, die mit einer korrespondierenden Pressfläche 212 in dem Aktuatormodul 2 bzw. dem Spulendeckelmodul 21 eine Pressverbindung zwischen dem Hauptstufenmodul 4 und dem Aktuatormodul 2 schafft.

Das dargestellte Hauptstufenmodul weist einen axialen Anschluss für das zu steuernde Fluid bzw. Hydraulikfluid auf, radiale Abflussöffnungen 42 und weiterhin ein Hauptstufenventil 43 mit einem auf der Zentralachse des Druckregelventils 1 axial beweglichen Ventilkörper 431. In dem dargestellten Ausführungsbeispiels ist das Hauptstufenventil 43 ein Kolbenschieberventil. Der Ventilkörper 431 wird durch ein Federelement 432 auf einen Anschlag 433 gedrängt und schließt dabei das Hauptstufenventil 43 im drucklosen Zustand. Die Steuerkante des Ventilkörpers 431 befindet sich dabei an dessen Außendurchmesser und wirkt mit den radialen Austrittsöffnungen 42 zusammen.

In einer nicht explizit dargestellten Ausführungsvariante ist das Hauptstufenventil 43 ein Sitzventil. Der in Figuren 1A und 1B dargestellte Anschlag 433 bildet dann im einfachsten Fall einen Ventilsitz 433, so dass sich die Steuerkante des Ventilkörpers 431 an dessen dem Ventilsitz 433 zugewandten axialen Seite befindet und diese dann mit dem Ventilsitz 433 zusammenwirkt.

Weiterhin umfasst der Ventilkörper 431 des Hauptstufenventils 43 (in beiden oben genannten Ausführungsvarianten) in an sich bekannter Art und Weise eine Drossel 434 und schafft somit im Zusammenwirken mit dem Pilotstufenmodul 3 und vorliegend dem Aktuatormodul 2 den Pilotraum 5. Dadurch öffnet das Hauptstufenventil 43 dann, wenn in dem Pilotraum 5 ein ausreichend niedriger Druck herrscht bzw. wenn durch den Druckabfall an der Drossel des Ventilkörpers 431 eine Kraft erzeugt wird, die die Federkraft des Federelements 432 überwindet.

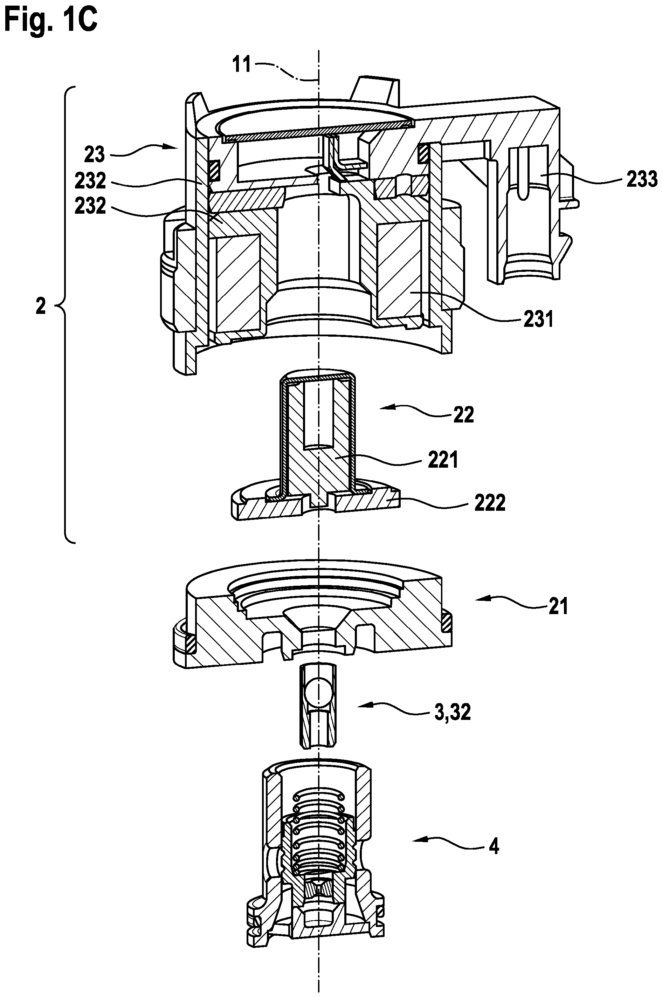

In Figur 1C ist auch das modular aufgebaute Aktuatormodul 2 in einer Explosionsansicht bezüglich dessen Baugruppen bzw. Modulen Spulendeckelmodul 21, Magnetantriebsmodul 22 und Spulenmodul 23 dargestellt. Dabei umfasst das Spulenmodul 23 eine Magnetspule 231, magnetisch leitendes Material 232 zur Schaffung (eines Teils) des Magnetkreises und einen elektrischen Anschluss 233 zur Versorgung der Magnetspule 231. Das Magnetantriebsmodul 22 weist ein Betätigungselement in Form eines Magnetankers 221 auf, der entlang einer Aktuatorachse, die auch in den Figuren mit der Zentralachse 11 des Druckregelventils 1 zusammenfällt, linear verfahrbar ist und einen Ventilkörper 33 des Pilotstufenventils 32 des Pilotstufenmoduls 3 vorliegend direkt betätigt. Das Spulendeckelmodul 21 ist vorliegend einstückig aus magnetisch leitendem Material aufgebaut, schließt den Magnetkreis und schafft zusammen mit dem Spulenmodul ein Gehäuse für das Aktuatormodul 2. Dabei sind in dem dargestellten Ausführungsbeispiel Spulendeckelmodul 21 und Spulenmodul 23 ausschließlich über genau eine Pressverbindungen miteinander fest verbunden. Weiterhin sind Spulendeckelmodul 21 und Magnetantriebsmodul 22 über eine Presseverbindung und zusätzlich über eine Verschweißung miteinander fest verbunden. Die Module des Aktuatormoduls 2 weisen dazu entsprechende Pressflächen auf. Dagegen sind Magnetantriebsmodul 22 und Spulenmodul 23 nicht miteinander fest verbunden.

Das in den Figuren 1A, B und C gezeigte Magnetantriebsmodul 22 weist einen Polkern 223 auf, der an einem zum Pilotstufenmodul 3 gerichteten Ende des Magnetantriebsmoduls angeordnet ist. Bei Bestromung der Magnetspule 231 verfährt der Magnetanker 221 in Richtung des Polkerns 223 und somit in Richtung des Pilotstufenmoduls 3. Entsprechend wird das Pilotstufenventil 32 bei Bestromung geschlossen, so dass das in den Figuren 1A bis 1C dargestellte Magnetantriebsmodul 22 ein NO-Ventil schafft.

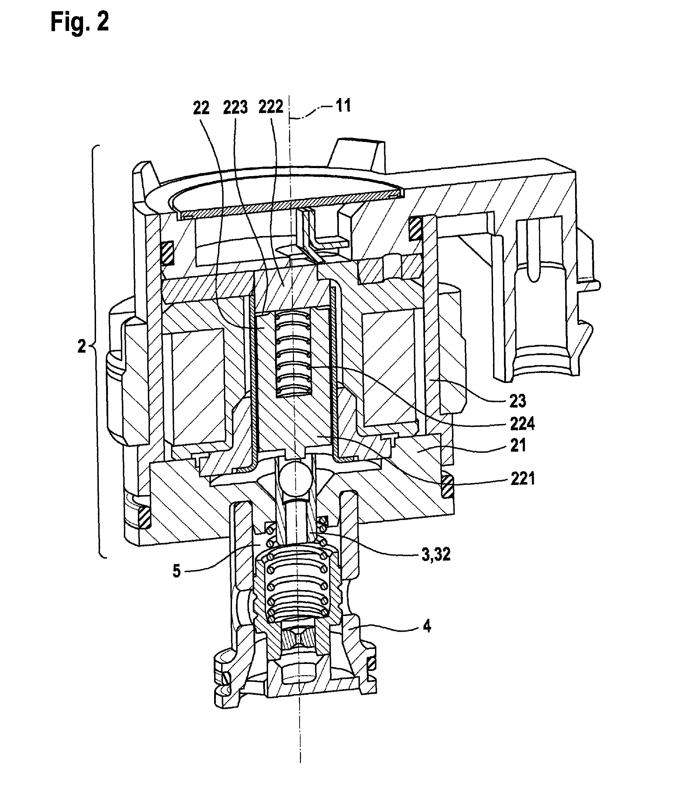

In Figur 2 ist eine Variante des Druckregelventils 1 aus den Figuren 1A bis 1C dargestellt, die sich nur durch den Aufbau des Magnetantriebsmoduls 22 unterscheidet. Hier ist der Polkern 223 an dem von dem Pilotstufenmodul abgewandten Ende des Magnetantriebsmoduls 22 angeordnet, so dass sich der Magnetanker 221 bei Bestromung von dem Pilotstufenmodul 3 wegbewegt. Dabei ist weiterhin ein Federelement 224 vorgesehen, das den Magnetanker 221 im unbestromten Fall von dem Polkern 223 weg und in Richtung des Polstufenmoduls 3 drängt, so dass das Pilotstufenmodul 32 im unbestromten Fall geschlossen ist. Das in Figur 2 dargestellte Magnetantriebsmodul 22 schafft somit ein NC-Ventil.

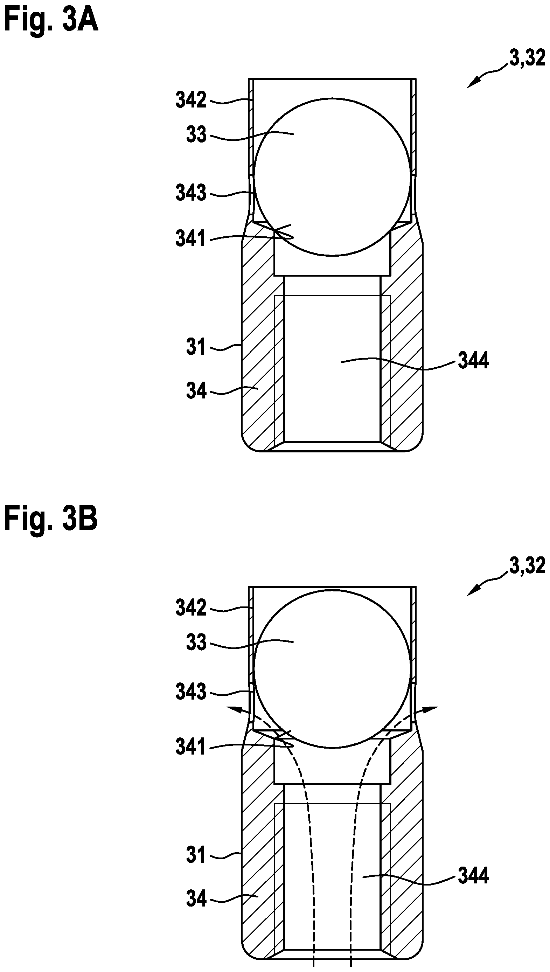

In Figur 3A ist ein Schnitt durch ein Pilotstufenmodul 3 dargestellt. Dieses umfasst einen Modulkörper 34 und einen Ventilkörper 33, der vorliegend als Kugelventilkörper ausgebildet ist. Der Modulkörper 34 umfasst auf der Innenseite einen Ventilsitz 341, der vorliegend als Kegelsitz ausgebildet ist, sowie stromabwärts dazu, das heißt in Figur 3A obenliegend, einen Führungsabschnitt 342 mit einer zylindrischen, innenseitigen Führung für den Kugelventilkörper 33, wenn dieser sich von dem Ventilsitz 341 abhebt. Weiterhin umfasst der Modulkörper 34 radiale Ausströmöffnungen 343 für das Fluid bei geöffnetem Pilotstufenventil 32, die in dem dargestellten Ausführungsbeispiel axial zwischen Ventilsitz 341 und dem Führungsabschnitt 342 angeordnet sind. Der Modulkörper umfasst weiterhin auf seiner radialen Außenseite die bereits oben beschriebene Pressfläche 31.

In Figur 3A ist das Pilotstufenmodul 3 bzw. dessen Pilotstufenventil 32 in geschlossenem Zustand dargestellt; der Kugelventilkörper 33 verschließt den Kegelventilsitz 341. In Figur 3B ist das Pilotstufenventil in geöffnetem Zustand dargestellt; der Kugelventilkörper 33 hebt sich von dem Kegelventilsitz 341 ab und das Fluid strömt aus dem Pilotraum 5 durch das Innere des Modulkörpers 34 vorbei an dem Ventilsitz 341 und dem Ventilkörper 33 und verlässt das Pilotstufenmodul 3 über die radialen Ausströmöffnungen 343.

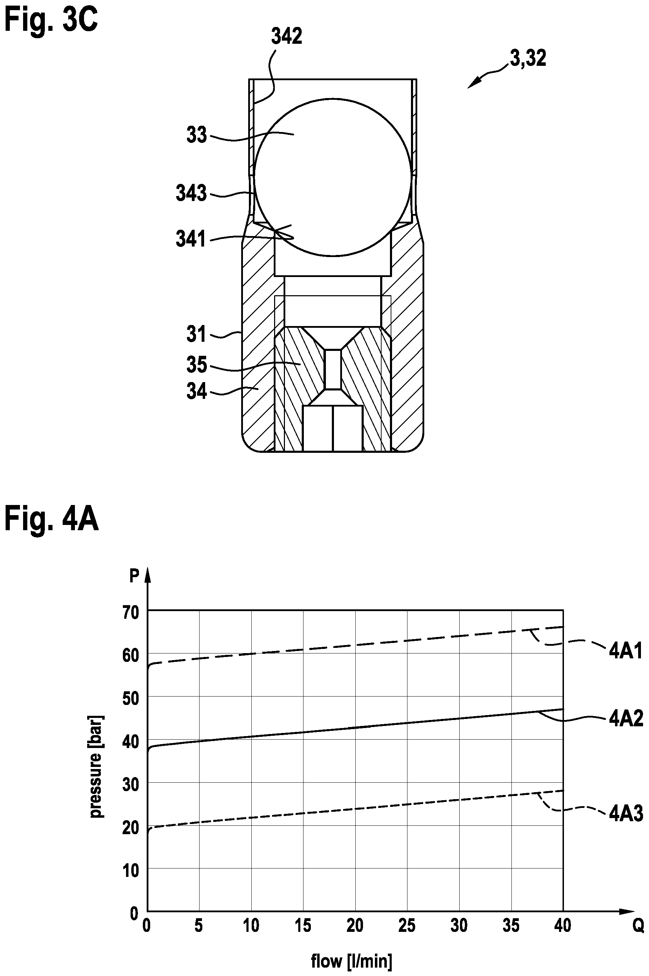

Weiterhin umfasst der Modulkörper 34 stromaufwärts zu dem Ventilsitz 341 eine Ausnehmung 344 zur Aufnahme eines Fluid-Bauteils 35. Dieses ist vorliegend als Drossel 35 ausgebildet, wie dies in Figur 3C dargestellt ist. Eine derartige Drossel 35 gestattet beispielsweise die Steigung in einem p-Q-Diagramm, das heißt die Zunahme des Fluidstroms bezogen auf die Zunahme eines anliegenden Drucks einzustellen bzw. zu variieren. Zudem kann dadurch die Dämpfung der Hauptstufe und damit das dynamische Verhalten des Ventils mit Hilfe der Blende bzw. Drossel 35 beeinflusst werden.

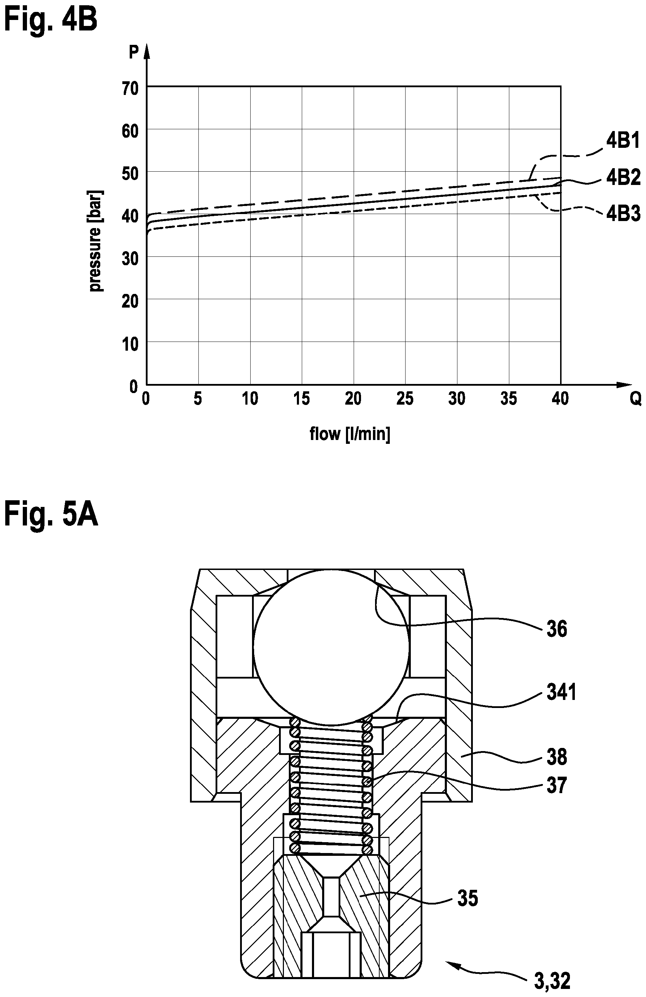

In Figuren 4A und 4B sind verschiedene p-Q-Diagramme des Druckregelventils 1 dargestellt. Generell fließt zunächst bei von Null zunehmendem Druck kein Fluid durch das Druckregelventil 1, da das Hauptstufenventil 42 wie auch das Pilotstufenventil 32 geschlossen sind. Bei Erreichen des sogenannten Öffnungsdrucks öffnet das Pilotstufenventil 32, so dass ein Druckabfall in dem Pilotraum 5 stattfindet, der dann auch das Hauptstufenventil 42 öffnet. Nach Erreichen des Öffnungsdrucks steigt der Fluidstrom durch das Druckregelventil 1 bei weiter zunehmendem Druck mit geringer Steigung und vorliegend annähernd linear an.

In Figur 4A sind verschiedene Kennlinien für verschiedene Sitzdurchmesser des Kegelventilsitzes 341 dargestellt. Generell wird bei einem gegebenen, an dem Druckregelventil 1 anliegenden Druck bei einem kleinen Sitzdurchmesser eine geringere hydraulische Kraft auf den Ventilkörper 33 ausgeübt als bei einem größeren Sitzdurchmesser. Entsprechend öffnet das Pilotstufenventil bei kleinem Sitzdurchmesser erst bei relativ großem Öffnungsdruck. In Figur 4A entspricht die Kennlinie 4A1, die den größten Öffnungsdruck aufweist, dem kleinsten Sitzdurchmesser des Kegelventilsitzes 341, die Kennlinie 4A2 mit einem mittleren Öffnungsdruck einem mittleren Sitzdurchmesser und die Kennlinie 4A3 mit einem geringen Öffnungsdruck dem größten Sitzdurchmesser. Die übrigen Parameter, beispielsweise die Bestromung des Druckventils 1, wurden dabei konstant gehalten und vorliegend auf den Maximalstrom eingestellt.

In Figur 4B sind wiederum p-Q-Kennlinien dargestellt, hier für den Fall verschiedener Größen des Luftspalts 223 zwischen Magnetanker 221 und Polkern 222. Der wird vorliegend durch eine axiale Verschiebung des Pilotstufenmoduls 3 in dem Aktuatormodul 2 bzw. dessen Spulendeckelmodul 21 realisiert, wobei Pilotstufenmodul 3 und Aktuatormodul 2 über eine Pressverbindung verbunden sind. Dabei wird vorliegend davon ausgegangen, dass es sich um ein NO-Ventil handelt. Die in dem Diagramm obere Kennlinie 4B1 mit dem größten Öffnungsdruck wird bei einem kleinen Luftspalt realisiert, das heißt wenn das Pilotstufenmodul 3 weniger tief in das Aktuatormodul 2 eingesetzt ist und entsprechend der Magnetanker 221 erst bei einem relativ kleinen Luftspalt 223 zum Polkern 222 am Ventilkörper 33 des Pilotstufenventils 32 anschlägt. Dagegen entspricht die in dem Diagramm untere Kennlinie 4B3 dem Fall, dass der Magnetanker 221 bereits bei relativ großem Luftspalt 223 an dem Ventilkörper 33 des Pilotstufenventils 32 anschlägt, was durch ein tieferes Einsetzen des Pilotstufenmoduls 3 in das Aktuatormodul 2 erreicht werden kann. Die mittlere Kennlinie 4B2 entspricht dann einem Luftspalt 223 mittlerer Größe.

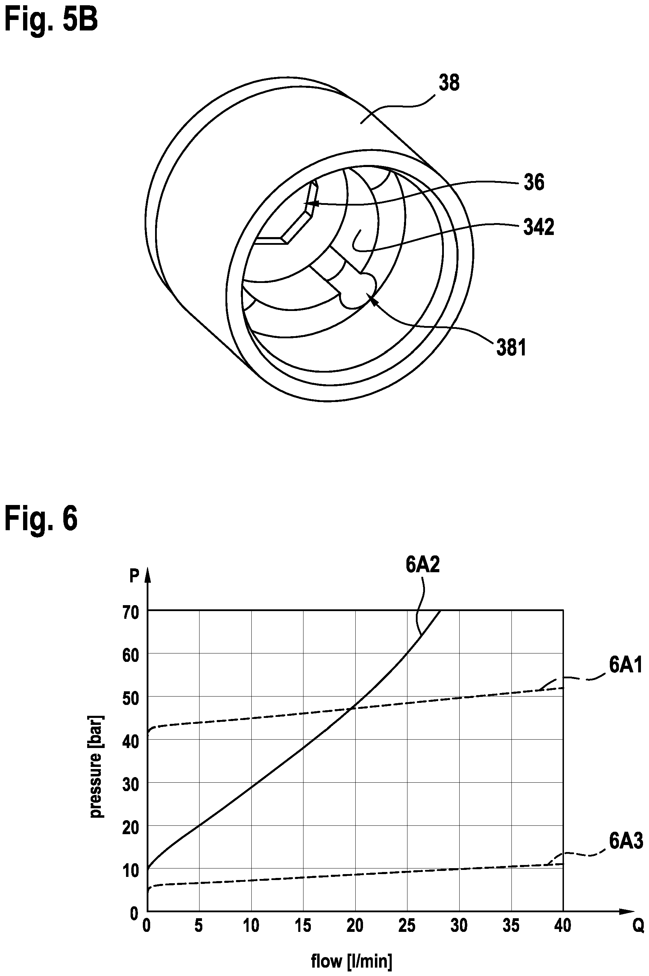

In Figur 5A ist ein Schnitt durch ein zweites Ausführungsbeispiel eines Pilotstufenmodul 3 dargestellt, das eine Drossel 35 aufweist. Zusätzlich zu der beispielsweise in Figur 3C dargestellten Ausgestaltung umfasst das in der Figur 5 dargestellte zweite Ausführungsbeispiel einen Failsafe-Ventilsitz 36 als zweiten Ventilsitz, der dem Kegelventilsitz 341 als erstem Ventilsitz gegenüberliegt und selbst ebenfalls als Kegelsitz ausgebildet ist. Weiterhin umfasst das zweite Ausführungsbeispiel des Pilotstufenmoduls 3 ein Federelement 37, welches den Kugelventilkörper 33 in den Failsafe-Ventilsitz 36 drängt und diesen im unbestromten Fall auch in dem Failsafe-Ventilsitz 36 hält. Der Failsafe-Ventilsitz 36 wird in dem dargestellten Ausführungsbeispiel über ein zusätzliches Bauteil, das sogenannte Failsafe-Bauelement 38, bereitgestellt.

In Figur 5B ist eine perspektivische Innenansicht des Failsafe-Bauelements 38 dargestellt. In diesem zweiten Ausführungsbeispiel wird der Führungsabschnitt 342 für den Kugelventilkörper 33 nicht durch den Modulkörper 34, sondern durch das Failsafe-Bauelement 38 geschaffen, wobei das Failsafe-Bauelement 38 als Kappe axial auf der stromabwärtigen Seite des Kegelventilsitzes 341 auf dem Modulköper 34 angeordnet ist. Ebenso existieren keine radialen Ausströmöffnungen in dem Pilotstufenmodul 3 bzw. dem Modulkörper 34; vielmehr ist die axiale Öffnung des Failsafe-Ventilsitzes 36 die einzige Fluid-Durchtrittsöffnung im Pilotstufenmodul 3 gemäß dem zweiten Ausführungsbeispiel.

Befindet sich der Kugelventilkörper 33 im Failsafe-Ventilsitz 36, so ist dieser nicht vollständig geschlossen. Dies wird vorliegend durch seitliche Bypassöffnungen 381 im Führungsabschnitt 342 des Failsafe-Ventilsitzes 36 und/oder durch eine nicht-kreisförmige Kontur des Failsafe-Ventilsitzes 36 bzw. dessen Fluid-Durchtrittsöffnung sichergestellt. In dem dargestellten Ausführungsbeispiel ist der Failsafe-Ventilsitz ein Vieleck in Form eines regelmäßigen Achtecks. Jedoch können auch andere, bevorzugt regelmäßige Vielecke verwendet werden.

Im unbestromten Fall, wenn der Magnetanker 221 keine Kraft auf das Pilotstufenventil 32 ausübt (NO-Ventil bzw. Aktuatormodul, dessen Magnetanker bei Bestromung ausfährt), wird der Kugelventilkörper 33 durch das Federelement in dem stromabwärtigen Failsafe-Ventilsitz 36 gehalten. Dieser schließt den Fluidpfad durch das Pilotstufenventil 32 nicht vollständig, sondern gewährleistet durch die Bypassöffnungen 381 bzw. durch die beispielsweise vieleckige Form des Failsafe-Ventilsitzes 36, in dem unbestromten Fall, einen bestimmten (mittleren, von Null verschiedenen, nicht maximalen) freien Fluid-Querschnitt. In diesem Betriebszustand wirkt das Pilotventil dann wie eine zusätzliche, konstante Drossel im Pilotstufenventil 32. Da der Failsafe-Ventilsitz 36 mit seiner Drosselwirkung stromabwärts des Pilotraums 5 sitzt, in der sich der Druck zur Steuerung des Hauptventils bildet, wird das Fluid in dem Pilotraum 5 zusätzlich angestaut. An dem Hauptstufenventil muss folglich ein höherer Druck anliegen, um den Druckabfall an dem Ventilkörper 431 des Hauptstufenventils 43 bzw. dessen Drossel zu erzeugen, der zum Öffnen des Hauptstufenventils 43 benötigt wird. Daher liegt der Öffnungsdruck einer Failsafe-Kennlinie 6A2 im p-Q-Diagramm (siehe Figur 6) höher als derjenige der Kennlinie für die sogenannte Mindestbestromung 6A3, bei der das Pilotstufenventil 32 maximal geöffnet ist bzw. den größten Fluid-Durchtrittsquerschnitt aufweist.

Bei der sogenannten Mindestbestromung der Spule wird der Kugelventilkörper 32 durch den Magnetanker 221, allgemein das Betätigungselement des Aktuatormoduls 2, gegen die Federkraft des Federelements 37 von dem Failsafe-Ventilsitz 36 abgehoben und in eine mittlere Position zwischen dem Failsafe-Ventilsitz 36 und dem Kegel-Ventilsitz 341 bewegt. Damit wird bei der Mindestbetromung eine p-Q-Kennlinie realisiert, die (analog zu einem NO-Ventil) einen nur geringen Öffnungsdruck aufweist und oberhalb des Öffnugnsdrucks annähernd linear mit geringer Steigung verläuft. Der Öffnungsdruck ist auch in diesem Fall nicht gleich Null, da zunächst ein Mindestdruck an der Hauptstufe aufgebaut werden muss, um einen ausreichenden Druckabfall über die Drossel des Ventilkörpers 43 des Hauptstufenventils 42 zu erzeugen, um die Federkraft des Federelements 432 des Hauptstufenventils 43 zu überwinden.

Bei Maximalbestromung wird der Kugelventilkörper 33 im drucklosen Fall auf den Kegel-Ventilsitz 341 des Pilotstufenventils 32 gedrückt, so dass das Pilotstufenventil 32 erst nach dem Überwinden der Magnetkraft, das heißt erst bei einem relativ hohen Öffnungsdruck, öffnet (Kennlinie 6A1 in Figur 6). Bei weiter zunehmendem Druck steigt der Fluidstrom dann in gleicher Weise wie bei der Mindestbestromung an.

Dagegen ist im unbestromten Fall, wenn der Ventilkörper 32 in dem Failsafe-Ventilsitz 36 sitzt, eine höhere Zunahme des Drucks an der Hauptstufe nötig, um die notwendige Durckdifferenz zu erzeugen. Folglich nimmt der Volumenstrom bei steigendem Druck an der Hauptstufe im unbestromten Fall (Failsafe-Fall) deutlich langsamer zu als bei Mindest- oder Maximalbestromung.

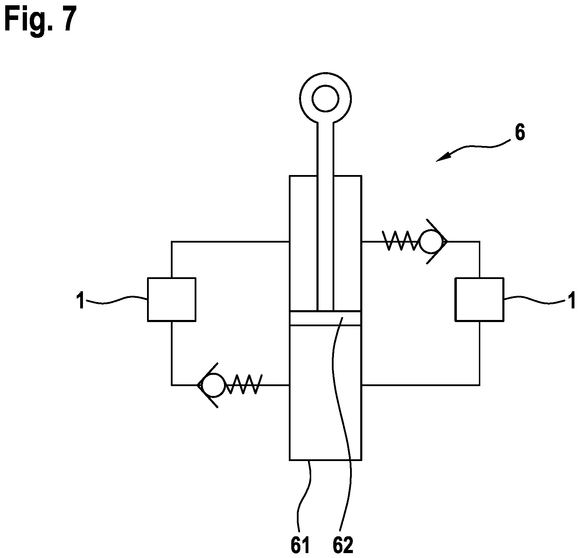

In Figur 7 ist ein Stoßdämpfer 6 mit zwei Druckregelventilen 1 schematisch dargestellt. Der Stoßdämpfer 6 umfasst einen Druckzylinder 61, in dem ein axial verfahrbarer Kolben 62 das Volumen des Druckzylinders in zwei Druckkammern teilt, die für jede Strömungsrichtung jeweils über ein Druckregelventil 1 (und ein Rückschlagventil) verbunden sind. Anstelle der in Figur 7 dargestellten zwei Druckregelventile 1 kann auch ein einziges Druckregelventil 1 mit einer Fluid-Gleichrichtung (nicht dargestellt) verwendet werden.

### BEZUGSZEICHENLISTE

- 1: Druckregelventil
- 11: Zentralachse

- 2: Aktuatormodul
- 21: Spulendeckelmodul
- 211: Pressfläche
- 212: Pressfläche
- 22: Magnetantriebsmodul
- 221: Magnetanker, Betätigungselement
- 222: Polkern
- 223: Luftspalt
- 224: Federelement
- 23: Spulenmodul
- 231: Magnetspule
- 232: magnetisch leitendes Material
- 233: elektrischer Anschluss

- 3: Pilotstufenmodul
- 31: Pressfläche
- 32: Pilotstufenventil
- 33: Ventilkörper, Kugelventilkörper
- 34: Modulkörper
- 341: Ventilsitz, Kegelventilsitz
- 342: Führungsabschnitt
- 343: radiale Ausströmöffnungen
- 344: Ausnehmung für 35
- 35: Drossel, Blende, Fluid-Bauteil
- 36: Failsafe-Ventilsitz
- 37: Federelement, Schraubenfeder
- 38: Failsafe-Bauelement
- 381: Bypassöffnungen
- 4: Hauptstufenmodul
- 41: Pressfläche
- 42: radiale Abflussöffnungen
- 43: Hauptstufenventil
- 431: Ventilkörper
- 432: Federelement, Schraubenfeder
- 433: Anschlag/Ventilsitz
- 434: Drossel

- 5: Pilotraum

- 6: Stoßdämpfer
- 61: Druckzylinder
- 62: Kolben

## Patentansprüche

1. Druckregelventil (1) umfassend ein Pilotstufenventil (32) mit einem Kugelventilkörper (33) **gekennzeichnet durch** einem Kegelsitz (341), wobei
- das Pilotstufenventil (32) einen einstückigen Modulkörper (34) aufweist, der den Kegelsitz (341) und einen Führungsabschnitt (342) für den Kugelventilkörper (33) aufweist, und/oder
- das Pilotstufenventil (32) einen bzw. den vor dem letzten "und" bereits genannten Führungsabschnitt (342) für den Kugelventilkörper (33) aufweist, der eine zylindrische Innenwandung aufweist mit einem Innendurchmesser, der dem Durchmesser des Kugelventilkörpers zuzüglich einem Spiel entspricht.

2. Druckregelventil (1) nach Anspruch 1, **dadurch gekennzeichnet, dass**
- dass das Pilotstufenventil (32) einen Aufnahmeabschnitt (344) zur Aufnahme eines Fluid-Bauteils, insbesondere einer Drossel, aufweist, der bevorzugt ein Gewinde aufweist.

3. Druckregelventil (1) nach einem der vorhergehenden Ansprüche, **dadurch gekennzeichnet,**
- **dass** das Pilotstufenventil (32) einen Failsafe-Ventilsitz (36) aufweist, bevorzugt am dem Kegelsitz (341) gegenüberliegenden Ende des Führungsabschnitts (342), sowie bevorzugt ein Federelement (37), das den Kugelventilkörper (33) in den Failsafe-Ventilsitz drängt.

4. Druckregelventil (1) nach einem der vorhergehenden Ansprüche, umfassend eine Vielzahl von Funktionsmodulen, bevorzugt vormontierten Funktionsmodulen, umfassend ein Aktuatormodul (2) und ein Pilotstufenmodul (3), das das Pilotstufenventil (32) umfasst oder daraus besteht, wobei bevorzugt Pilotstufenmodul (3) und Aktuatormodul (2) über eine Pressverbindung, insbesondere ausschließlich über eine Pressverbindung, miteinander fest verbunden sind und bevorzugt eine Zentralachse (11) aufweisen.

5. Druckregelventil (1) nach Anspruch 4, weiterhin umfassend ein Hauptstufenmodul (4) als weiteres Funktionsmodul, das bevorzugt über eine Pressverbindung mit dem Aktuatormodul (2) oder dem Pilotstufenmodul (3) fest verbunden ist und/oder das ein Hauptstufenventil (43) aufweist, das als Kolbenschieberventil oder als Sitzventil ausgebildet ist.

6. Druckregelventil (1) nach einem der Ansprüche 4 bis 5, **dadurch gekennzeichnet, dass** das Druckregelventil ausschließlich aus Funktionsmodulen und/oder wenigstens oder genau aus dem Aktuatormodul (2), dem Pilotstufenmodul (3) und dem Hauptstufenmodul (4) besteht oder aufgebaut ist.

7. Druckregelventil (1) nach einem der Ansprüche 4 bis 6, **dadurch gekennzeichnet, dass** das Aktuatormodul (2) einen Aktuator mit einer Aktuatorachse aufweist, wobei bevorzugt der Aktuator als Linearaktuator ausgebildet ist und/oder das Aktuatormodul eine zylindrische Pressfläche (211, 212) aufweist, die besonders bevorzugt koaxial zu der Aktuatorachse angeordnet ist.

8. Druckregelventil (1) nach einem der Ansprüche 4 bis 7, **dadurch gekennzeichnet, dass** das Pilotstufenmodul (3)
- ein Pilotstufenventil (32) aufweist, das bevorzugt entlang einer Ventilachse betätigbar ist und/oder
- eine zylindrische Pressfläche (31) aufweist, die bevorzugt koaxial zu der Ventilachse angeordnet ist.

9. Druckregelventil (1) nach Ansprüchen 7 und 8, **dadurch gekennzeichnet, dass** die Akturatorachse und die Ventilachse des Pilotstufenventils (32) eine gemeinsame Zentralachse (11) des Druckregelventils bilden.

10. Druckregelventil (1) nach einem der Ansprüche 4 bis 9, **dadurch gekennzeichnet, dass** ein Betätigungselement (221) des Aktuatormoduls (2) zur Betätigung des Pilotstufenventils (32) an einem Ventilkörper (33) des Pilotstufenmoduls (3) anstößt.

11. Druckregelventil (1) nach einem der Ansprüche 5 bis 10, **dadurch gekennzeichnet, dass** die Pressverbindung zwischen Hauptstufenmodul (4) und Aktuatormodul (2) oder Pilotstufenmodul (3) durch korrespondierende zylindrische Pressflächen (41, 212) geschaffen wird, die bevorzugt koaxial zu der Zentralachse (11) angeordnet sind.

12. Druckregelventil (1) nach einem der Ansprüche 4 bis 11, **dadurch gekennzeichnet, dass** das Aktuatormodul (2) ein Spulenmodul (23), ein Magnetantriebsmodul (22) und ein Spulendeckelmodul (21) umfasst, wobei bevorzugt das Spulenmodul und das Magnetantriebsmodul über jeweils eine Pressverbindung fest mit dem Spulendeckelmodul verbunden sind, wobei jede der Pressverbindungen bevorzugt durch jeweils zwei korrespondierende zylindrische Pressflächen geschaffen wird, die besonders bevorzugt koaxial zu der Zentralachse (11) angeordnet sind, und/oder wobei bevorzugt keine feste Verbindung, besonders bevorzugt keine Pressverbindung, zwischen Spulenmodul und Magnetantriebsmodul vorgesehen ist.

13. Druckregelventil (1) nach Anspruch 12, **dadurch gekennzeichnet, dass** das Spulendeckelmodul (21) in dem Druckregelventil zentral angeordnet ist und/oder das Spulendeckelmodul (21) mit dem Pilotstufenmodul (3), dem Hauptstufenmodul (4), dem Spulenmodul (23) und dem Magnetantriebsmodul (22) über jeweils eine Pressverbindung fest verbunden ist und bevorzugt das Pilotstufenmodul, das Hauptstufenmodul, das Spulenmodul und das Magnetantriebsmodul keine feste Verbindung, bevorzugt keine Pressverbindung, untereinander aufweisen.

14. Druckregelventil (1) nach Anspruch 12 oder 13, **dadurch gekennzeichnet, dass** das Magnetantriebsmodul (22) ein beweglich gelagertes Betätigungselement (221) bzw. einen beweglich gelagerten Magnetanker sowie bevorzugt einen Polkern (222) aufweist.

15. Stoßdämpfer (6) umfassend ein, zwei oder mehrere Druckregelventile (1) gemäß einem der vorhergehenden Ansprüche.

## Claims

1. A pressure regulation valve (1) comprising a pilot stage valve (32) with a ball valve body (33) **characterized by** a conical seat (341), wherein
- the pilot stage valve (32) has a single-piece module body (34) which has the conical seat (341) and the guide section (342) for the ball valve body (33), and/or
- the pilot stage valve (32) has a or the already before the last "and" mentioned guide section (342) for the ball valve body (33) that has a cylindrical inner wall having an inner diameter that corresponds to the diameter of the ball valve body plus play.

2. The pressure regulation valve (1) according to claim 1, **characterized in that**
- the pilot stage valve (32) has a receiving section (344) for receiving a fluid component, in particular a throttle, which preferably has a thread.

3. The pressure regulation valve (1) according to any of the preceding claims, **characterized in that**
- the pilot stage valve (32) has a failsafe valve seat (36), preferably at the end of the guide section (342) located opposite the conical seat (341), and preferably a spring member (37), which biases the ball valve body (33) into the failsafe valve seat.

4. The pressure regulation valve (1) according to any of the preceding claims, comprising a multiplicity of function modules, preferably pre-mounted function modules, comprising an actuator module (2) and a pilot stage module (3), which comprises the pilot stage valve (32) or consists thereof, wherein preferably the pilot stage module (3) and the actuator module (2) are firmly interconnected via a press connection, in particular exclusively via a press connection, and preferably have a central axis (11).

5. The pressure regulation valve (1) according to claim 4, further comprising a main stage module (4) as a further function module, which is preferably firmly connected to the actuator module (2) or the pilot stage module (3) via a press connection and/or which has a main stage valve (43) which is formed as a piston slide valve or as a seat valve.

6. The pressure regulation valve (1) according to any of claims 4 to 5, **characterized in that** the pressure regulation valve consists of or is constructed exclusively from function modules and/or at least or exactly of/from the actuator module (2), the pilot stage module (3) and the main stage module (4).

7. The pressure regulation valve (1) according to any of claims 4 to 6, **characterized in that** the actuator module (2) has an actuator with an actuator axis, wherein preferably the actuator is formed as a linear actuator and/or the actuator module has a cylindrical press area (211, 212), which is arranged particularly preferably coaxially to the actuator axis.

8. The pressure regulation valve (1) according to any of claims 4 to 7, **characterized in that** the pilot stage module (3)
- has a pilot stage valve (32) which can be operated preferably along a valve axis and/or
- has a cylindrical press area (31) which is preferably arranged coaxially to the valve axis.

9. The pressure regulation valve (1) according to claims 7 and 8, **characterized in that** the actuator axis and the valve axis of the pilot stage valve (32) form a common central axis (11) of the pressure regulation valve.

10. The pressure regulation valve (1) according to any of claims 4 to 9, **characterized in that** an operation member (221) of the actuator module (2) abuts on a valve body (33) of the pilot stage module (3) for operating the pilot stage valve (32).

11. The pressure regulation valve (1) according to any of claims 5 to 10, **characterized in that** the press connection between the main stage module (4) and the actuator module (2) or the pilot stage module (3) is created by corresponding cylindrical press areas (41, 212), which are preferably arranged coaxially to the central axis (11).

12. The pressure regulation valve (1) according to any of claims 4 to 11, **characterized in that** the actuator module (2) comprises a coil module (23), a magnetic drive module (22) and a coil lid module (21), wherein preferably the coil module and the magnetic drive module are firmly connected to the coil lid module via a press connection in each case, wherein each of the press connections is created preferably by respectively two corresponding cylindrical press areas, which are arranged particularly preferably coaxially to the central axis (11), and/or wherein preferably no firm connection, particularly preferably no press connection, is provided between the coil module and the magnetic drive module.

13. The pressure regulation valve (1) according to claim 12, **characterized in that** the coil lid module (21) is arranged centrally in the pressure regulation valve and/or the coil lid module (21) is firmly connected to the pilot stage module (3), the main stage module (4), the coil module (23) and the magnetic drive module (22) via respectively one press connection and preferably the pilot stage module, the main stage module, the coil module and the magnetic drive module do not have a firm connection, preferably no press connection, among each other.

14. The pressure regulation valve (1) according to claim 12 or 13, **characterized in that** the magnetic drive module (22) has a movably borne operation member (221) or a movably borne magnetic armature and preferably a pole core (222).

15. A shock absorber (6) comprising one, two or several pressure regulation valves (1) according to any of the preceding claims.

## Revendications

1. Soupape de régulation de la pression (1) comprenant une soupape à étage pilote (32) ayant un corps de soupape sphérique (33) **caractérisé par** un siège conique (341), cependant que
- la soupape à étage pilote (32) comporte un corps de module (34) d'un seul tenant qui comporte le siège conique (341) et une section de guidage (342) pour le corps de soupape sphérique (33), et/ou
- la soupape à étage pilote (32) comporte une section de guidage (342), ou celle déjà nommée avant le dernier « et », pour le corps de soupape sphérique (33), laquelle a une paroi intérieure cylindrique d'un diamètre intérieur correspondant au diamètre du corps de soupape sphérique plus un jeu.

2. Soupape de régulation de la pression (1) selon la revendication 1, **caractérisée en ce que**
- la soupape à étage pilote (32) comporte une section de réception (344) pour la réception d'un composant pour fluide, en particulier d'un étrangleur, qui comporte de préférence un filetage.

3. Soupape de régulation de la pression (1) selon une des revendications précédentes, **caractérisée en ce que**
- la soupape à étage pilote (32) comporte un siège de soupape Failsafe (36), de préférence à l'extrémité, de la section de guidage (342), opposée au siège conique (341), ainsi que de préférence un élément ressort (37) qui pousse le corps de soupape sphérique (33) dans le siège de soupape Failsafe.

4. Soupape de régulation de la pression (1) selon une des revendications précédentes, comprenant une pluralité de modules fonctionnels, de préférence des modules fonctionnels préassemblés, comprenant un module actionneur (2) et un module à étage pilote (3) qui comprend la soupape à étage pilote (32) ou consiste en elle, cependant que, de préférence, le module à étage pilote (3) et le module actionneur (2) sont reliés entre eux de manière fixe par l'intermédiaire d'une liaison par pression, en particulier exclusivement par l'intermédiaire d'une liaison par pression, et ont de préférence un axe central (11).

5. Soupape de régulation de la pression (1) selon la revendication 4, comprenant en outre un module principal à étage (4) en tant qu'autre module fonctionnel, lequel est de préférence relié de manière fixe avec le module actionneur (2) ou avec le module à étage pilote (3) par l'intermédiaire d'une liaison par pression, et/ou lequel comporte un module principal à étage (43) réalisé sous forme de soupape à piston ou de soupape à siège.

6. Soupape de régulation de la pression (1) selon une des revendications de 4 à 5, **caractérisée en ce que** la soupape de régulation de la pression consiste ou est conçuE exclusivement en des modules fonctionnels et/ou au moins ou exactement en le module actionneur (2), le module à étage pilote (3) et le module principal à étage (4).

7. Soupape de régulation de la pression (1) selon une des revendications de 4 à 6, **caractérisée en ce que** le module actionneur (2) comporte un actionneur ayant un axe d'actionneur, cependant que, de préférence, l'actionneur est réalisé sous forme d'actionneur linéaire et/ou le module actionneur présente une surface cylindrique de pression (211, 212) qui, particulièrement de préférence, est agencée coaxialement à l'axe d'actionneur.

8. Soupape de régulation de la pression (1) selon une des revendications de 4 à 7, **caractérisée en ce que** le module à étage pilote (3)
- comporte une soupape à étage pilote (32) qui est de préférence actionnable le long d'un axe de soupape, et/ou
- comporte une surface cylindrique de pression (31) agencée de préférence coaxialement à l'axe de soupape.

9. Soupape de régulation de la pression (1) selon les revendications 7 et 8, **caractérisée en ce que** l'axe d'actionneur et l'axe de soupape de la soupape à étage pilote (32) constituent un axe central (11) commun de la soupape de régulation de la pression.

10. Soupape de régulation de la pression (1) selon une des revendications de 4 à 9, **caractérisée en ce qu'**un élément d'actionnement (221) du module actionneur (2) vient buter contre un corps de soupape (33) du module à étage pilote (3) pour l'actionnement du module à étage pilote (32).

11. Soupape de régulation de la pression (1) selon une des revendications de 5 à 10, **caractérisée en ce que** la liaison par pression entre le module principal à étage (4) et le module actionneur (2) ou le module à étage pilote (3) est engendrée par des surfaces cylindriques de pression (41, 212) correspondantes qui sont de préférence agencées coaxialement à l'axe central (11).

12. Soupape de régulation de la pression (1) selon une des revendications de 4 à 11, **caractérisée en ce que** le module actionneur (2) comprend un module bobine (23), un module d'entraînement magnétique (22) et un module couvercle de bobine (21), cependant que, de préférence, le module bobine et le module d'entraînement magnétique sont reliés de manière fixe avec le module couvercle de bobine respectivement par l'intermédiaire d'une liaison par pression, cependant que chacune des liaisons par pression est engendrée de préférence par respectivement deux surfaces cylindriques de pression correspondantes agencées particulièrement de préférence coaxialement à l'axe central (11), et/ou cependant que, de préférence, aucune liaison fixe, particulièrement de préférence aucune liaison par pression entre le module bobine et le module d'entraînement magnétique n'est prévue.

13. Soupape de régulation de la pression (1) selon la revendication 12, **caractérisée en ce que** le module couvercle de bobine (21) est agencé centralement dans la soupape de régulation de la pression, et/ou le module couvercle de bobine (21) est relié de manière fixe avec le module à étage pilote (3), le module principal à étage (4), le module bobine (23) et le module d'entraînement magnétique (22) par l'intermédiaire de respectivement une liaison par pression, et de préférence le module à étage pilote, le module principal à étage, le module bobine et le module d'entraînement magnétique ne présentent aucune liaison fixe entre eux, de préférence aucune liaison par pression.

14. Soupape de régulation de la pression (1) selon la revendication 12 ou 13, **caractérisée en ce que** le module d'entraînement magnétique (22) comporte un élément d'actionnement (221) monté mobile ou une armature d'aimant montée mobile ainsi que, de préférence, un noyau polaire (222).

15. Amortisseur (6) comprenant une, deux ou plusieurs soupapes de régulation de la pression (1) selon une des revendications précédentes.
